# EUROPÄISCHE PATENTSCHRIFT

(11) **EP 4 182 101 B1**
(45) Veröffentlichungstag und Bekanntmachung des Hinweises auf die Patenterteilung: **03.09.2025**
(21) Anmeldenummer: 21742364.9
(22) Anmeldetag: 07.07.2021
(51) Int. Cl.: B21C 51/00, B21F 3/02, B21F 35/00

(54) **VERFAHREN UND FEDERWINDEMASCHINE ZUR HERSTELLUNG VON SCHRAUBENFEDERN**
METHOD AND SPRING WINDING MACHINE FOR PRODUCING COIL SPRINGS
PROCÉDÉ ET MACHINE D'ENROULEMENT DE RESSORTS POUR PRODUIRE DES RESSORTS HÉLICOÏDAUX

(30) Priorität: 20.07.2020 DE 102020209068
(43) Veröffentlichungstag der Anmeldung: 24.05.2023
(73) Patentinhaber: WAFIOS Aktiengesellschaft, 72764 Reutlingen (DE)
(72) Erfinder: PANDTLE, Julian, 72379 Hechingen (DE)
(74) Vertreter: Patentanwälte Ruff, Wilhelm, Beier, Dauster & Partner mbB
(86) Internationale Anmeldenummer: PCT/EP2021/068739
(87) Internationale Veröffentlichungsnummer: WO 2022/017785

(56) Entgegenhaltungen:
- WO-A1-2004/101193
- DE-A1- 102010 014 385
- DE-B3- 102010 010 895
- JP-A- 2015 150 583

## Beschreibung

Die Erfindung bezieht sich auf ein Verfahren zur Herstellung von Schraubenfedern durch Federwinden mittels einer numerisch gesteuerten Federwindemaschine gemäß dem Oberbegriff von Anspruch 1 sowie auf eine zur Durchführung des Verfahrens geeignete Federwindemaschine.

Schraubenfedern sind Maschinenelemente, die in zahlreichen Anwendungsbereichen in großen Stückzahlen und unterschiedlichen Ausgestaltungen benötigt werden. Schraubenfedern, die auch als gewundene Torsionsfedern bezeichnet werden, werden üblicherweise aus Federdraht herstellt und je nach der bei der Nutzung vorliegenden Belastung als Zugfedern oder Druckfedern ausgelegt. Die Federcharakteristik kann unter anderem dadurch beeinflusst werden, dass Federabschnitte unterschiedlicher Steigung oder Steigungsverläufe gestaltet werden. Beispielsweise gibt es bei Druckfedern häufig einen mehr oder weniger langen mittleren Abschnitt mit konstanter Steigung, an den sich zu beiden Enden der Feder Anlageabschnitte mit zu den Enden geringer werdender Steigung anschließen. Der Federdurchmesser ist bei zylindrischen Schraubenfedern über die Länge der Federn konstant, er kann aber auch über die Länge variieren, wie z.B. bei kegelförmigen oder tonnenförmigen Schraubenfedern. Auch die Gesamtlänge der (unbelasteten) Feder kann für unterschiedliche Anwendungen stark variieren.

Schraubenfedern werden heutzutage üblicherweise durch Federwinden mit Hilfe numerisch gesteuerter Federwindemaschinen hergestellt. Dabei wird ein Draht (Federdraht) unter der Steuerung durch ein NC-Steuerprogramm mittels einer Zuführeinrichtung einer Umformeinrichtung der Federwindemaschine zugeführt und mit Hilfe von Werkzeugen der Umformeinrichtung zu einer Schraubenfeder umgeformt. Zu den Werkzeugen gehören in der Regel ein oder mehrere bezüglich ihrer Stellung einstellbare Windestifte zur Festlegung und ggf. zur Veränderung des Durchmessers von Federwindungen und ein oder mehrere Steigungswerkzeuge, durch die die lokale Steigung der Federwindungen in jeder Phase des Fertigungsprozesses bestimmt wird. Bei manchen Ausgestaltungen können Windestifte auch zur Beeinflussung der Steigung genutzt werden.

Federwindemaschinen sollen in der Regel bei hoher Stückleistung viele Federn mit einer bestimmten Federgeometrie (Soll-Geometrie) innerhalb sehr enger Toleranzen erzeugen. Zu den funktionswichtigen Geometrieparametern gehört z.B. die Gesamtlänge der fertigen Schraubenfeder im unbelasteten Zustand, die u.a. die Einbaumaße der Feder und die Federkraft mitbestimmt, sowie Steigungen bzw. Steigungsverläufe und der Durchmesser des Federkörpers.

Im Hinblick auf hohe Qualitätsanforderungen, z.B. im Automobilbereich oder im Medizinbereich, ist es üblich, gewisse Federgeometriedaten, wie beispielsweise den Durchmesser, die Länge und/oder die Steigung bzw. den Steigungsverlauf der Feder, nach Fertigstellung einer Feder zu messen und die fertigen Federn abhängig vom Ergebnis der Messung automatisch in Gutteile (Federgeometrie innerhalb der Toleranzen) und Schlechtteile (Ergebnis außerhalb der Toleranzen) und ggf. in weitere Kategorien zu sortieren.

Die DE 10 2010 010 895 B3 beschreibt ein Verfahren und ein System zur Herstellung von Schraubenfedern durch Federwinden, bei dem auf einem externen Messgerät gemessene Werte mit den Werten der Soll-Feder verglichen und automatisch von der Federherstellungsmaschine korrigiert werden. Vorzugsweise findet eine automatische oder automatisierbare Datenübergabe zwischen dem Messgerät und der Federwindemaschine statt, z. B. über eine Netzwerkverbindung.

Es ist auch schon vorgeschlagen worden, den Durchmesser, die Länge und/oder die Steigung der Feder durch geeignete Messmittel während der Fertigung zu überprüfen und bei außerhalb von Toleranzgrenzen liegenden Abweichungen Fertigungsparameter so zu verändern, dass die Federgeometrie innerhalb der Toleranzen bleibt. Eine in der DE 10 2010 014 385 B4 beschriebe Federwindemaschine umfasst eine Kamera, die derart angeordnet ist, dass ein Messbereich im Bildfeld der Kamera einen Teil eines Federabschnitts mit endlichem Abstand von den Werkzeugen der Umformeinrichtung erfasst. Die Stellung mindestens eines die Steigung der Schraubenfeder bestimmenden Werkzeugs der Umformeinrichtung wird in Abhängigkeit von Messwerten gesteuert, die aus den Messbildern ermittelt werden. Als Messwerte werden z.B. der axiale Abstand zwischen aufeinanderfolgenden Windungen oder der axiale Abstand zwischen einer ausgewählten Windung und einer maschinenfesten Referenz genutzt.

Bei der herkömmlichen Kameramessung werden vom Bediener vor Produktionsstart Bereiche und Messgrößen festgelegt, die im Prozess überwacht und geregelt werden können. Beispiele sind meist hell-dunkel Übergänge in definierten Messfenstern. Hierfür ist ein Eingriff des Bedieners erforderlich, der die Messfenster sowie die zugehörigen Kenngrößen (z.B. Durchmesser, Federlänge, Windungsabstand) festlegt.

Das Einrichten einer Federherstellungsmaschine für einen Prozess zur Herstellung einer Schraubenfeder beansprucht viel Zeit und Know-How. Dies gilt sowohl für das erstmalige Einrichten für eine bisher nicht gefertigte Federgeometrie als auch für das Wiedereinrichten, also in einer Situation, in der Schraubenfedern mit der gewünschten Federgeometrie bereits früher einmal gefertigt wurden und nun erneut gefertigt werden sollen. In diesem Fall existieren häufig sowohl ein geeignetes NC-Steuerprogramm als auch Messungen der Feder aus dem vorherigen Produktionslauf. Das Einrichten oder Wiedereinrichten kann unter anderem deshalb sehr aufwändig sein, weil Werkzeuge vom Bediener oftmals verändert werden, oder deren Position in der Maschine angepasst wird. Beispielsweise können die ausstehende Länge und/oder eine Verdrehung geändert werden. Diese Einflüsse können nicht von der Maschine erfasst werden und sind somit unbekannt. Ein Resultat dieser möglichen Veränderungen ist es, dass die Fahrwege bzw. Stellwege der Maschinenachsen, die erforderlich sind, um eine in die Steuerung eingegebene Feder zu fertigen, in einem ersten Schritt nur sehr grob bestimmt werden können. Im Anschluss muss der Maschinenbediener in der Regel nach dem Trial-and-Error-Prinzip so lange Korrekturen in der Steuerung (und somit im NC-Programm) vornehmen, bis die produzierte Feder der Soll-Geometrie im Rahmen der Toleranzen entspricht. Nach jeder Änderung sollte eine Feder in einem Messgerät gemessen werden, um entsprechende Abweichungen an den richtigen Stellen im Steuerprogramm korrigieren zu können. Da Federmessgeräte relativ teuer sind, werden diese meist zentral aufgestellt und von mehreren Bedienern und Maschinen genutzt. In der Praxis ist es somit üblich, dass der Werker nach jeder produzierten Feder zum Messgerät laufen muss. Eine Alternative bietet die Messung mittels Messschieber. Dabei kann jedoch die Form einer Feder nur sehr ungenau erfasst werden.

### AUFGABE UND LÖSUNG

Es ist eine Aufgabe der Erfindung, ein Verfahren und eine Federwindemaschine der gattungsgemäßen Art so zu optimieren, dass bei relativ geringen Anforderungen an die Erfahrung von Bedienern bereits nach kurzer Rüstzeit Schraubenfedern innerhalb enger geometrischer Toleranzen hergestellt werden können.

Diese Aufgabe wird gelöst durch ein Verfahren zur Herstellung von Schraubenfedern durch Federwinden mit den Merkmalen von Anspruch 1 sowie durch eine Federwindemaschine mit den Merkmalen von Anspruch 11. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei dem Verfahren wird eine gewünschte Soll-Geometrie der herzustellenden Schraubenfeder (Schritt A) definiert. Darauf basierend wird ein entsprechendes, zur Erzeugung dieser Soll-Geometrie geeignetes NC-Steuerprogramm (Schritt B) definiert. Mit dem NC-Steuerprogramm wird die Abfolge von koordinierten Arbeitsbewegungen der Maschinenachsen der Federwindemaschine vorgegeben, die bei der Herstellung einer Schraubenfeder zu durchlaufen sind.

Ein wesentlicher Schritt des Verfahrens ist das Erstellen bzw. Generieren eines dreidimensionalen Federmodells der Schraubenfeder unter Verwendung von (einem oder mehreren) Modellparametern (Schritt C). Der Begriff "Modell" bezeichnet hierbei ein vereinfachtes Abbild der Wirklichkeit. Ein Modell ist eine Repräsentation eines Originals. Ein Modell erfasst im Allgemeinen nicht alle Attribute des Originals, sondern nur diejenigen, die für den Zweck der Modellbildung relevant erscheinen.

Das Federmodell ist eine parametrisierte mathematische Beschreibung der Geometrie der Schraubenfeder in drei Dimensionen (3D-Federmodell). Das Federmodell wird in dieser Anmeldung auch als Helixmodell bezeichnet. Zum Generieren des Federmodells kann beispielsweise eine Helix bzw. eine Schraubenlinie parametrisiert werden, die den Verlauf der neutralen Faser des Drahts beschreibt, aus dem die Schraubenfeder hergestellt wird. Zur Parametrisierung können z.B. die lokale Steigung und der Radius (Halbmesser) bzw. der Durchmesser der Schraubenfeder in Abhängigkeit von einer axialen Position entlang der Federachse verwendet werden. Alternativ können z.B. Frenetsche Formeln zur Parametrisierung genutzt werden. Als Drahtdurchmesser des Helixmodells kann der im Steuerprogramm hinterlegte Drahtdurchmesser des bei der Fertigung verwendeten Drahts genutzt werden.

Dasjenige Federmodell, welches die gewünschte Soll-Geometrie der Schraubenfeder repräsentiert, fungiert als Startkonfiguration des Federmodells für nachfolgende Verfahrensschritte und wird in dieser Anmeldung auch als "erstes Federmodell" bezeichnet.

Der Schritt C, nämlich die Generierung des Federmodells, kann zeitlich unabhängig von Schritt B, nämlich der Erzeugung des NC-Steuerprogramms, erfolgen, also zeitlich vorher, nacher oder zeitgleich.

Das Verfahren umfasst weiterhin den Schritt des Erfassens wenigstens eines (zweidimensionalen) Messbilds eines Federabschnitts der Schraubenfeder zu einem Messzeitpunkt während oder nach der Herstellung der Schraubenfeder (Schritt D). Dazu wird eine Kamera verwendet, die in dieser Anmeldung auch als Messkamera bezeichnet wird, weil sie im Rahmen eines Messverfahrens verwendet wird und möglichst Eigenschaften einer Messkamera (z.B. geringe Verzeichnung) haben sollte. Der Begriff Kamera steht hier allgemein für eine Bilderfassungseinrichtung, also eine Einrichtung, mit der zweidimensionale Bilder eines zwei- oder dreidimensionalen Objekts erfasst bzw. generiert werden können.

Das zweidimensionale Messbild beinhaltet meist nur einen Abschnitt der Schraubenfeder, kann jedoch auch die Schraubenfeder in ihrer gesamten Länge beinhalten.

Das Messbild kann zeitlich vor oder nach der Erstellung des Federmodells oder zeitparallel dazu erfasst werden.

Ein weiterer Verfahrensschritt ist das Ableiten eines 2D-Referenzbilds eines zu dem Federabschnitt des Messbilds korrespondierenden Federabschnitts des (dreidimensionalen) Federmodells aus dem Federmodell (Schritt E). Das 2D-Referenzbild ist eine zweidimensionale Repräsentation des entsprechenden Federabschnitts, die aus dem dreidimensionalen Federmodell abgeleitet wird. Der Schritt des Ableitens eines 2D-Referenzbilds umfasst in der Regel die Berechnung einer Projektion des interessierenden 3D-Federabschnitts des Federmodells aus einer bestimmten Perspektive in eine Ebene, wobei die Perspektive idealerweise der Perspektive der Messkamera entsprechen sollte.

Das 2D-Referenzbild kann dadurch abgeleitet werden, dass eine zweidimensionale Repräsentation des kompletten Federmodells errechnet und bei Bedarf ein Ausschnitt daraus als 2D-Referenzbild eines interessierenden Federabschnitts weiterverarbeitet wird. Die Ableitung des 2D-Referenzbilds erfolgt vorzugsweise zeitlich nach der Erfassung des Messbildes, wenn also feststeht, welchen Federabschnitt das Messbild enthält. Diese Reihenfolge ist jedoch nicht zwingend. Das 2D-Referenzbild kann auch zeitlich vor der Erfassung des Messbildes erzeugt werden.

In einem weiteren Schritt (Schritt F) wird das 2D-Referenzbild, welches aus dem Federmodell abgeleitet wurde, mit dem korrespondierenden Messbild des Federabschnitts verglichen, um wenigstens eine Abweichungskenngröße zu ermitteln. In diesem Schritt des Vergleichens von Bildinhalten wird quantitativ ermittelt, ob und inwieweit das 2D-Referenzbild, das aus dem 3D-Federmodell abgeleitet wurde, mit dem an der tatsächlichen Schraubenfeder erfassten Messbild übereinstimmt bzw. von diesem abweicht.

Die Bilder (Messbild und 2D-Referenzbild) können z.B. rechnerisch übereinandergelegt und pixelweise, also Pixel für Pixel bzw. Bildelement für Bildelement, verglichen werden. Dabei können Pixel, deren Helligkeitswerte genau oder innerhalb eines vorgebbaren engen Wertebereichs übereinstimmen, als identisch bewertet werden, bei größeren Abweichungen im Helligkeitswert werden die Pixel als Differenzpixel bewertet. Zur Quantifizierung der Abweichung bei einem Bildvergleich kann dann beispielsweise die Summe der Differenzpixel ermittelt und mit der Summe der übereinstimmenden Pixel ins Verhältnis gesetzt werden. Dieses Verhältnis kann als Abweichungskenngröße genutzt und bei der Optimierung minimiert werden.

Alternativ oder zusätzlich sind auch andere Vergleichsmethoden verwendbar. Beispielsweise kann z.B. eine Positionsdifferenz markanter Punkte als Abweichungskenngröße genutzt werden. Dazu können z.B. über einen Filter die Kanten der Feder im Messbild identifiziert werden (z.B. Canny-Algorithmus) und eine Ausgleichsfunktion kann über die Pixel der Kanten gebildet werden Dies kann z.B. ein Polynom höherer Ordnung oder eine Fourier Reihe sein. Aus der Ausgleichsfunktion können markante Punkte, wie z.B. Hochpunkte, Tiefpunkte und/oder Wendepunkte berechnet werden. Werden diese markanten Punkte nun auch aus dem 2D-Referenzbild der Helix berechnet, können die Punkte aus dem Referenzbild mit Punkten aus dem Messbild verglichen werden. Ein Vorteil zum Vergleich der Pixel besteht darin, dass die Information des Versatzes zweier Punkte als Information in die Optimierungsiterationen eingehen kann und beschreibt, welche Bereiche des Helixmodells um welchen Wert geändert werden müssen.

Über die mathematische Beschreibung des Federmodells bzw. Helixmodells können nun Messwerte (einer oder mehrere) zur Beschreibung der Geometrie der Schraubenfeder abgeleitet werden. Dementsprechend umfasst das Verfahren (in Schritt G) das Ableiten wenigstens eines die Ist-Geometrie der Schraubenfeder beschreibenden Messwerts aus dem Federmodell. Als Messwerte können z.B. die Steigung bzw. ein Steigungsverlauf, der Durchmesser bzw. ein Durchmesserverlauf und/oder die gestreckte Länge der Schraubenfeder ermittelt werden.

Im Schritt H des Verfahrens erfolgt dann eine Verarbeitung des (mindestens einen) aus dem Federmodell abgeleiteten Messwerts. Der Messwert kann z.B. zum Einrichten der Federwindemaschine genutzt werden. Der Messwert kann ggf. auch bei der Steuerung der Federmaschine während der Herstellung einer aktuellen Schraubenfeder oder einer nächsten Schraubenfeder mit derselben Soll-Geometrie verwendet werden. Es ist auch möglich, den Messwert lediglich anzuzeigen.

Mithilfe des Verfahrens wird somit eine modellbasierte Federmessung realisiert. Eine modellbasierte Federmessung unterscheidet sich von herkömmlichen Messungen an realen Federn dadurch, dass Messwerte nicht direkt an der zu vermessenden Schraubenfeder bzw. aus dem Messbild ermittelt werden, sondern anhand eines Federmodells, welches die Schraubenfeder mithilfe von Modellparametern mathematisch exakt beschreibt oder wenigstens in ausreichend guter Näherung annähert. Da ein Federmodell die modellierte Feder in drei Dimensionen beschreibt, kann somit eine dreidimensionale Messung realisiert werden, die die Eigenschaften der zu vermessenden Schraubenfeder in drei Dimensionen berücksichtigt.

Ein Vorteil eines dreidimensionalen Messens auf der Maschine liegt darin, dass gemessene Werte direkt an die Maschine zurückgegeben werden können. Somit wäre ein Regeln der gesamten Federform (nicht nur einzelner Werte) möglich. Der Einrichtvorgang bzw. das Rüsten der Maschine kann somit automatisiert bzw. deutlich vereinfacht werden.

Im Vergleich zum Stand der Technik können nun beliebig viele Messwerte aus dem modifizierten Federmodell abgeleitet werden, da dieses kontinuierlich formuliert ist.

Es ist möglich, dass das vom ersten Federmodell abgeleitete 2D-Referenzbild dem Bildinhalt des Messbildes bereits derart ähnlich ist, dass eventuelle Abweichungen bereits im Toleranzbereich liegen. Dann kann eine Modifizierung des Federmodells zur besseren Anpassung an das Messbild ggf. entfallen. In vielen Fällen können jedoch zunächst relativ große Abweichungen vorliegen.

Daher ist gemäß einer Weiterbildung ein weiterer Verfahrensschritt vorgesehen, in welchem das Federmodell durch Veränderung wenigstens eines Modellparameters in der Weise modifiziert bzw. variiert wird, dass eine durch die Abweichungskenngröße definierte Abweichung zwischen dem 2D-Referenzbild und dem Messbild des Federabschnitts im Hinblick auf ein Abweichungskriterium minimiert wird. Dadurch wird ein modifiziertes Federmodell bestimmt, welches typischerweise von dem ursprünglichen (ersten) Federmodell in der Weise abweicht, dass das zugehörige 2D-Referenzbild des interessierenden Federabschnitts dem entsprechenden Federabschnitt im Messbild ähnlicher ist als beim ursprünglichen (ersten) Federmodell.

Die Modellparameter des Federmodells können dabei in einem iterativen Prozess verändert und das Resultat jeweils mit dem Messbild verglichen werden. Bei dem Vergleich werden jeweils die Abweichungskenngrößen für die Abweichungen zwischen Federmodell und Messbild generiert. Ziel dieses Modifikationsschritts kann es sein, diese Abweichungskenngrößen (mindestens eine) so weit zu minimieren, dass sie unter einem definierten Schwellwert liegen. Nach diesem Verfahrensschritt liegt ein modifiziertes Federmodell vor, welches wenigstens in Bezug auf den im Messbild betrachteten bzw. dem Vergleich zugrunde gelegten Federabschnitt besser zum Messbild passt als der entsprechende Federabschnitt des ursprünglichen Federmodells. Das modifizierte Federmodell wird dann als Federmodell für die nachfolgenden Schritte verwendet.

Es ist möglich, das erste Federmodell unabhängig von der Erstellung des zugehörigen NC-Steuerprogramms aus Geometrieangaben für die Soll-Geometrie rechnerisch zu erzeugen. Gegebenenfalls können unterschiedliche Federmodelle für unterschiedliche Soll-Geometrien in Form entsprechender Datensätze in einer Datenbank hinterlegt sein, aus der dann im Rahmen einer Einrichtprozedur das gewünschte Federmodell für die weitere Verwendung ausgewählt wird.

Gemäß einer Weiterbildung ist vorgesehen, dass ein erstes Federmodell, welches meist als Ausgangspunkt bzw. Startkonfiguration für nachfolgende Variationsrechnungen dient, auf Basis des für die Soll-Geometrie definierten NC-Steuerprogramms automatisch erstellt wird. Ein Eingriff eines Bedieners für die Erstellung des ersten Federmodells ist in diesem Fall nicht erforderlich.

Bei manchen Verfahrensvarianten wird beim Erstellen des ersten Federmodells aus Zeilen des NC-Steuerprogramms eine Glättungsoperation durchgeführt in der Weise, dass das Federmodell durch eine stetig differenzierbare Funktion beschreibbar ist. Diese Maßnahme berücksichtigt, dass in einem NC-Steuerprogramm beispielsweise ein Steigungsverlauf in manchen Fällen unstetig beschrieben wird. Daher sollten diese Werte zunächst geglättet werden, beispielsweise durch eine geeignete Filterroutine. Eine Glättungsoperation kann beispielsweise das plastische Verformungsverhalten eines Drahts beim Federwinden berücksichtigen, indem zum Beispiel Knicke oder starke Steigungsänderungen geglättet werden, da im Bereich von Knicken oder starken Steigungsänderungen das Drahtmaterial fließen und eine glattere Form annehmen kann.

Ein angestrebtes Ergebnis der Berechnungen eines Federmodells ist ein mathematisch möglichst vollständig beschriebenes Helixmodell der gewundenen Schraubenfeder. Das Federmodell kann, abhängig von der Komplexität der abzubildenden Schraubenfeder, die komplette Feder mit einem einzigen Satz von Modellparametern beschreiben oder aus einer Aneinanderreihung mehrerer Teil-Modelle bestehen.

Bei manchen Ausführungsformen wird beim Erstellen des Federmodells eine Reihe mit zwei oder mehr Teil-Modellen erstellt, die unmittelbar aufeinanderfolgende Abschnitte der Schraubenfeder repräsentieren. Dabei kann zum Beispiel beim Erstellen des ersten Federmodells auf Basis des für die Soll-Geometrie definierten NC-Steuerprogramms über die Anzahl der Zeilen des NC-Steuerprogramms eine geeignete Anzahl von Teil-Modellen zum Zusammensetzen der kompletten Feder ermittelt werden. Dabei kann z.B. berücksichtigt werden, dass innerhalb einer Zeile keine Änderung der für die Erzeugung der Steigung oder des Durchmessers vorgesehenen Maschinenachsen stattfindet, so dass ein zylindrischer Federkörperabschnitt resultiert. Zwischen zwei Zeilen kann sich der Durchmesser und/oder die Steigung aber auch ändern. Dies kann zum Beispiel in konischen Federkörperabschnitten mit Veränderung der Steigung resultieren. Bei Berechnung von zwei oder mehr Teil-Modellen und deren Aneinanderreihung zum kompletten Federmodell können auch komplexe Federformen mit ausreichender Originaltreue abgebildet bzw. modelliert werden.

Bei einer Weiterbildung ist vorgesehen, dass beim Modifizieren des Federmodells die Teil-Modelle einzeln und nacheinander korrespondierenden Federabschnitten im Messbild angepasst werden. Dadurch kann meist substantiell Rechenzeit eingespart werden, die Optimierung konvergiert tendenziell schneller als im Falle einer Anpassungsrechnung für die komplette Schraubenfeder. Dieser Rechenzeitvorteil kann z.B. dann besonders nützlich sein, wenn die modellbasierte Federmessung während der Herstellung einer Schraubenfeder, also bei einer In-Prozess-Messung, genutzt wird.

Bei dem Verfahren wird ein 2D-Abbild der realen Welt (nämlich der Inhalt des Messbilds) mit einem mathematischen Federmodell verglichen. Um eine unmittelbare Vergleichbarkeit zwischen dem 2D-Referenzbild und dem Messbild zu erreichen, ist vorzugsweise vorgesehen, dass eine Kalibrierung der Kamera durchgeführt wird. Für die Kalibrierung kann beispielsweise ein durch die Kamera erfasster Drahtdurchmesser mit einem im NC-Steuerprogramm hinterlegten Drahtdurchmesser des Drahts verrechnet werden. In diesem Fall dient der reale Drahtdurchmesser als Maßverkörperung, der zur Kalibrierung genutzt wird. Alternativ kann beispielsweise die Kalibrierung mithilfe einer Schablone bekannter Dimensionen erfolgen. Die Kalibrierung umfasst hierbei auch die Berücksichtigung der ermittelten Abweichung bei der anschließenden Benutzung des Messgeräts (Kamera) zur Korrektur von aus dem Messbild ermittelten Werten.

Beim Verfahrensschritt des Modifizierens bzw. Variierens des Federmodells zur Errechnung des modifizierten Federmodells werden in einem einzigen Schritt oder in mehreren Iterationen die Modellparameter des Helixmodells variiert, um eine möglichst gute Übereinstimmung zum Messbild zu erzielen. Vorzugsweise umfassen die Modellparameter sowohl Geometrie-Parameter, die die Geometrie der Schraubenfeder definieren, als auch Perspektiv-Parameter, die die räumliche Orientierung der Kamera in Bezug auf die Schraubenfeder definieren. Es wird derzeit davon ausgegangen, dass ein sinnvoller Bildvergleich in vernünftiger Rechenzeit vor allem dann möglich ist, wenn neben Geometrie-Parametern auch Perspektiv-Parameter berücksichtigt werden.

Bei einem Federwindeprozess rotiert die sich entwickelnde Schraubenfeder während des Federwindeprozesses um ihre eigene Achse (Federachse). Dies wird bei manchen Ausführungsformen dazu genutzt, während der Herstellung der Schraubenfeder mehrere Messbilder zu unterschiedlichen Messzeitpunkten zu erfassen und die Messbilder zum Vergleichen mit dem Federmodell zu nutzen. Es können somit bei unveränderter Kameraposition Bilder der Schraubenfeder aus mehreren unterschiedlichen Richtungen erfasst und für einen dreidimensionalen Abgleich mit dem Federmodell genutzt werden. Über eine Zuordnung der Achswerte der Maschinenachsen der Federwindemaschine zu dem jeweiligen Messzeitpunkt ist es dadurch möglich, zusätzliche Informationen für höhere Genauigkeit und/oder schnellere Berechnung zu generieren.

Mit dem Verfahren ist es möglich, über eine mathematische Beschreibung des Federmodells bzw. Helixmodells Messwerte (einen oder mehrere) zur geometrischen Charakterisierung der Schraubenfeder aus dem (modifizierten Federmodell) abzuleiten. Da man über die Abweichungskenngrößen weiß, wie groß ein Messfehler an einer jeweiligen Position ist, ist es möglich, die Messfehler an der jeweiligen Stelle der Schraubenfeder mit in die Darstellung der Messwerte einzubeziehen. So können beim Ableiten wenigstens eines die Federgeometrie der Schraubenfeder beschreibenden Messwerts aus dem modifizierten Federmodell für ausgewählte Positionen entlang der Schraubenfeder aus den Abweichungskenngrößen korrespondierende Messfehler ermittelt und weiterverarbeitet werden. Die Weiterverarbeitung kann beispielsweise darin bestehen, dass die Messfehler positionsbezogen angezeigt werden.

Die Erfindung bezieht sich auch auf eine numerisch gesteuerte Federwindemaschine, die besonders zur Durchführung des Verfahrens konfiguriert ist. Sie hat eine Einzugseinrichtung zum Zuführen von Draht zu einer Umformeinrichtung sowie eine Umformeinrichtung mit mindestens einem Windewerkzeug, welches im Wesentlichen den Durchmesser der Schraubenfeder an einer vorgebbaren Position bestimmt, sowie mindestens ein Steigungswerkzeug, dessen Eingriff an der sich entwickelnden Schraubenfeder die lokale Steigung der Schraubenfeder bestimmt.

Bei manchen modernen CNC-Federwindemaschinen, die bereits ein geeignetes Messsystem mit wenigstens einer Kamera haben, kann die Erfindung mit bereits vorhandenen konstruktiven Voraussetzungen umgesetzt werden. Die Fähigkeit zur Ausführung von Ausführungsformen der Erfindung kann in Form zusätzlicher Programmteile oder Programmmodule bzw. in Form einer Programmänderung in die Steuerungssoftware von computergestützten Steuereinrichtungen implementiert werden.

Daher betrifft ein weiterer Aspekt der vorliegenden Erfindung ein Computerprogrammprodukt, welches auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass eine über den Computer gesteuerte Federwindemaschine ein Verfahren gemäß der Erfindung bzw. einer bevorzugten Ausführungsform hiervon durchführt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt Elemente einer CNC-Federwindemaschine gemäß einem Ausführungsbeispiel;
- Fig. 2: zeigt einige Anbaugruppen für die in Fig. 1 gezeigte Federwindemaschine;
- Fig. 3A, 3B und 3C: zeigen Beispiele für Messbilder;
- Fig. 4: zeigt ein Diagramm zur Erläuterung der Effekte einer Glättungsoperation;
- Fig. 5: zeigt eine schematische Darstellung des räumlichen Bezugs zwischen dem Blickpunkt der Kamera und einem Fixpunkt des Federmodells für die Ermittlung eines Perspektiv-Parameters;
- Fig. 6: zeigt eine gemeinsame Darstellung eines beobachteten Federabschnitts der Schraubenfeder im Messbild und dazu korrespondierende Abschnitte des Federmodells im angepassten 2D-Referenzbild;
- Fig. 7: zeigt eine schematische Darstellung einer Abfolge von Verfahrensschritten bei einer Verfahrensvariante.

### DETAILLIERTE BESCHREIBUNG DER AUSFÜHRUNGSBEISPIELE

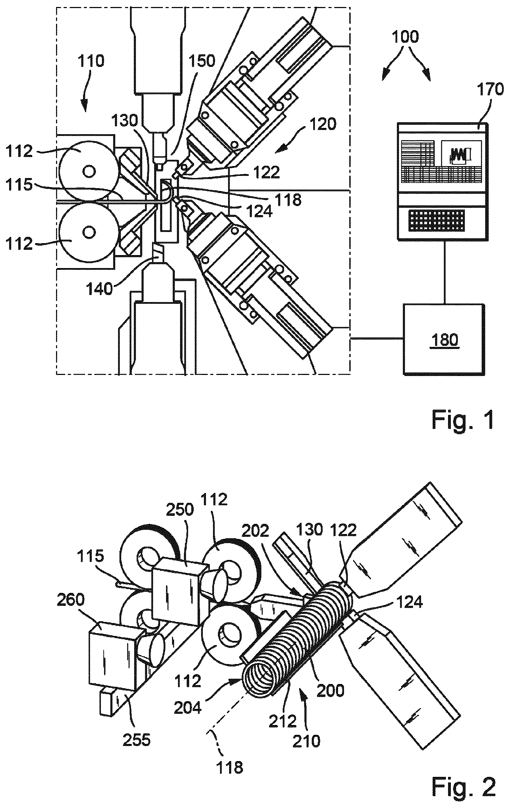

Die schematische Übersichtsdarstellung in Fig. 1 zeigt Elemente einer CNC-Federwindemaschine 100 gemäß einem Ausführungsbeispiel. Die Federwindemaschine kann gemäß einer an sich bekannten Konstruktion (vgl. z.B. DE 10 2010 014 385 B4) aufgebaut sein.

Die Federwindemaschine 100 hat eine mit Einzugswalzen 112 ausgestattete Einzugseinrichtung 110, die aufeinanderfolgende Drahtabschnitte eines von einem Drahtvorrat kommenden und durch eine Richteinheit geführten Drahtes 115 mit numerisch gesteuertem Vorschubgeschwindigkeitsprofil in einer Einzugsrichtung bzw. Zufuhrrichtung in den Bereich einer Umformeinrichtung 120 zuführt. Der Draht wird mit Hilfe von numerisch gesteuerten Werkzeugen der Umformeinrichtung zu einer Schraubenfeder 200 umgeformt. Die Einzugsrichtung verläuft senkrecht zu einer Mittelachse 118 der Federwindemaschine.

Zu den Werkzeugen gehören zwei um 90° winkelversetzt angeordnete Windestifte 122, 124, die in Radialrichtung zur Mittelachse 118 (entspricht der idealen Lage der Federachse bei der Herstellung) ausgerichtet sind und dafür vorgesehen sind, den Durchmesser der Schraubenfeder zu bestimmen. Die Position der Windestifte kann zur Grundeinstellung für den Federdurchmesser beim Einrichten entlang senkrecht zur Mittelachse orientierter Bahnen sowie in horizontaler Richtung (parallel zur Vorschubrichtung der Einzugseinrichtung) verändert werden, um die Maschine für unterschiedliche Federdurchmesser einzurichten. Diese Bewegungen können auch mit Hilfe geeigneter elektrischer Antriebe unter Kontrolle der numerischen Steuerung vorgenommen werden.

Ein Steigungswerkzeug 130 hat eine im Wesentlichen senkrecht zur Federachse ausgerichtete Spitze, die neben den Windungen der sich entwickelnden Feder eingreift. Das Steigungswerkzeug ist mit Hilfe eines numerisch gesteuerten Verstellantriebs der entsprechenden Maschinenachse parallel zur Mittelachse 118 der sich entwickelnden Feder (d.h. senkrecht zur Zeichnungsebene) verfahrbar. Der bei der Federherstellung vorgeschobene Draht wird vom Steigungswerkzeug entsprechend der Position des Steigungswerkzeugs in Richtung parallel zur Federachse abgedrängt, wobei durch die Position des Steigungswerkzeuges die lokale Steigung der Feder im entsprechenden Abschnitt bestimmt wird. Steigungsänderungen werden durch achsparalleles Verfahren des Steigungswerkzeugs während der Federherstellung bewirkt.

Die Umformeinrichtung hat ein weiteres, von unten vertikal zustellbares Steigungswerkzeug 140 mit einer keilförmigen Werkzeugspitze, die bei Einsatz dieses Steigungswerkzeuges zwischen benachbarte Windungen eingeführt wird. Die Stellbewegungen dieses Steigungswerkzeuges verlaufen senkrecht zur Mittelachse 118. Dieses Steigungswerkzeug ist beim gezeigten Herstellungsverfahren nicht im Eingriff.

Oberhalb der Federachse ist ein numerisch steuerbares Trennwerkzeug 150 angebracht, das nach Abschluss der Umformoperationen die hergestellte Schraubenfeder mit einer vertikalen Arbeitsbewegung vom zugeführten Drahtvorrat abtrennt. In Fig. 1 ist der zugeführte Draht in einer Situation unmittelbar nach Abtrennen der vorher fertig gestellten Schraubenfeder gezeigt. In dieser Stellung hat der Draht bereits eine halbe Windung gebildet und das Drahtende, das den Federanfang bildet, befindet sich 0,3 Windungen vor der Position des Steigungswerkzeugs 130.

Die zu den Werkzeugen gehörenden Maschinenachsen der CNC-Maschine werden durch eine computernumerische Steuereinrichtung 180 gesteuert, die Speichereinrichtungen hat, in denen die Steuerungssoftware residiert, zu der u.a. ein NC-Steuerprogramm für die Arbeitsbewegungen der Maschinenachsen gehört.

Zur Fertigung einer Schraubenfeder wird der Draht mit Hilfe der Einzugseinrichtung 110 in Richtung der Windestifte 122, 124 vorgeschoben und durch die Windestifte auf den gewünschten Durchmesser unter Ausbildung einer kreisbogenförmigen Krümmung umgelenkt, bis das freie Drahtende das Steigungswerkzeug 130 erreicht. Bei weiterem Drahtvorschub bestimmt die axiale Position des Steigungswerkzeuges die aktuelle lokale Steigung der sich entwickelnden Schraubenfeder. Das Steigungswerkzeug wird unter der Kontrolle des NC-Steuerprogramms axial verschoben, wenn während der Federentwicklung die Steigung geändert werden soll. Die Stellbewegungen des Steigungswerkzeuges legen im Wesentlichen den Steigungsverlauf entlang der Schraubenfeder fest.

Anhand Fig. 2 werden einige Anbaugruppen für die in Fig. 1 gezeigte Federwindemaschine erläutert, welche für die Umsetzung des Verfahrens vorteilhaft sind. Die aus Fig. 1 bereits bekannten Elemente sind mit den gleichen Bezugszeichen wie in Fig. 1 gekennzeichnet. Fig. 2 zeigt die Federwindemaschine während der Herstellung einer relativ langen, zylindrischen Schraubenfeder 200, von der zu dem in der Abbildung gezeigten Zeitpunkt etwa zwanzig Windungen bereits hergestellt sind. Um sicherzustellen, dass die mit zunehmendem Drahtvorschub immer länger werdende Feder gerade bleibt und sich nicht mit ihrem freien Ende nach unten durchbiegt, ist eine Federführungseinrichtung 210 vorgesehen. Die Federführungseinrichtung hat ein mit horizontaler Längsachse am Gestell der Federwindemaschine befestigtes Winkelblech 212 mit V-förmigem Profil. Die nach unten zusammenlaufenden, ebenen Schrägflächen des Winkelblechs stützen die Feder nach unten und seitlich ab, so dass die Längsachse (Zentralachse) der sich entwickelnden Feder koaxial zur Mittelachse 118 der sich entwickelnden Feder verläuft. Das Winkelblech ist mittels einer nicht gezeigten Haltereinrichtung am Maschinengestellt befestigt und in seiner Höhe sowie in seitlicher Richtung verstellbar, um für Federn unterschiedlicher Durchmesser die gewünschte, zur Mittelachse 118 der Feder koaxiale Führung zu ermöglichen. Das Winkelblech kann nach Abschluss der Fertigung einer Feder automatisch mittels eines hydraulischen Schwenkantriebs nach unten geschwenkt werden, damit die fertige Feder in einen Sammelbehälter rutschen kann.

Das der Umformeinrichtung zugewandte Ende des Winkelblechs befindet sich in einem lichten Abstand einiger Zentimeter von der Umformeinrichtung entfernt, so dass zwischen den Werkzeugen der Umformeinrichtung und dem maschinenseitigen Beginn des Winkelblechs ein frei schwebender Federabschnitt 202 verbleibt. Die Länge des Winkelblechs ist so an die Gesamtlänge der fertigen Schraubenfeder angepasst, dass der zuerst gefertigte Federendabschnitt in der Endphase der Fertigung frei über das maschinenferne Ende des Winkelblechs hinausragt. Der maschinennahe, frei schwebende Federabschnitt 202 und der maschinenferne Federendabschnitt 204 werden dadurch für eine optische Messung mit Beobachtungsrichtung senkrecht zur Mittelachse 118 zugänglich.

Die Federwindemaschine ist mit einem kamerabasierten, optischen Messsystem zur berührungslosen Echtzeiterfassung von Daten über die Geometrie einer aktuell hergestellten Feder (Ist-Geometrie) ausgestattet. Das Messsystem hat zwei identische Kameras 250, 260, die als Messkameras dienen und im Beispielsfall in Form von CCD-Videokameras ausgebildet sind, die z.B. bei einer Auflösung von 1024 x 768 Pixeln (Bildelementen) bis zu 100 Bilder pro Sekunde (frames per second) über eine Schnittstelle an ein angeschlossenes Bildverarbeitungssystem liefern können. Die Bilderfassung der Einzelbilder wird jeweils über Auslösesignale (Trigger) der Steuerung ausgelöst. Dadurch werden die Messzeitpunkte festgelegt. Die Software für die Bildverarbeitung ist in einem Programmmodul untergebracht, welches mit der Steuereinrichtung 180 der Federwindemaschine zusammenarbeitet bzw. in diese integriert ist.

Beide Kameras sind auf einer verwindungssteifen Trägerschiene 255 befestigt, die seitlich neben der Federführungseinrichtung im Bereich der Führungsrollen der Zuführeinrichtung am Maschinengestell der Federwindemaschine so befestigt ist, dass die Längsachse der Trägerschiene parallel zur Maschinenachse 118 verläuft. Die Messkameras sind auf der Trägerschiene in deren Längsrichtung verschiebbar und an beliebig wählbaren Längspositionen fixierbar.

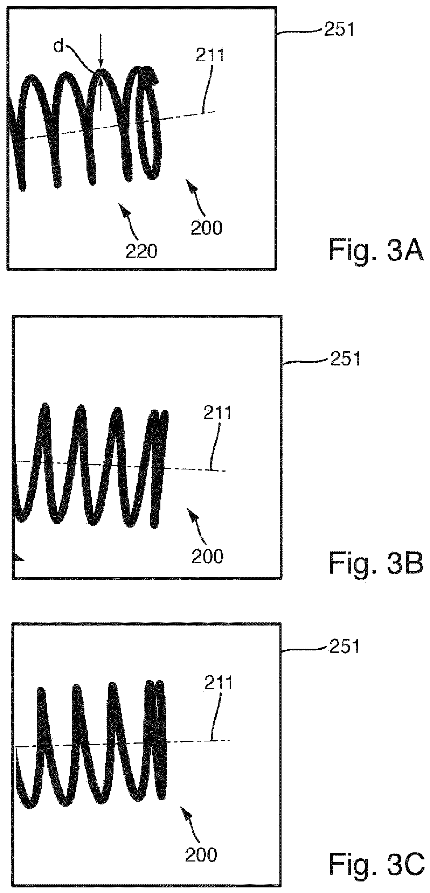

Die maschinennahe erste Kamera 250 ist so angebracht, dass ihr rechteckiges Bildfeld (Bildererfassungsbereich) einen Teil des frei schwebenden Federabschnitts 202 mit Abstand von den umformenden Werkzeugen erfasst (vergleiche Fig. 3A bis 3C). Die optische Achse der Kameraoptik ist im Beispielsfall etwa auf Höhe der Mittelachse der Schraubenfeder (d.h. auf Höhe der Mittelachse 118) angeordnet und verläuft senkrecht zu dieser Achse.

Die zweite Kamera 260 ist für die Erfassung des freien Federendes 204 bestimmt und daher so auf der Trägerschiene positioniert, dass das freie Federende in der Endphase der Herstellung der Schraubenfeder in den Erfassungsbereich der zweiten Kamera hineinläuft.

Diametral gegenüber den Kameras ist auf Höhe der Mittelachse 118 eine nicht dargestellte Beleuchtungseinrichtung angebracht, die zu den von der Steuerung vorgegebenen Messzeitpunkten als Reaktion auf Auslösesignale (Trigger) der Steuerung blitzartig aufleuchtet und eine Messung im Durchlicht ermöglicht. Auf der Seite der Kameras kann eine Auflicht-Beleuchtungseinrichtung vorgesehen sein, um die Sichtbarkeit interessierender Details der Feder für die Messung zu verbessern.

Es gibt auch Ausführungsformen, die nur eine einzige Kamera haben. Beispielsweise kann die zweite Kamera entfallen, z.B. wenn die zu fertigenden Schraubenfedern nicht sehr lang sind. Auch eine gesonderte Federführung, z.B. das Winkelblech, kann entfallen.

Die Fig. 3A, 3B und 3C zeigen Beispiele für Messbilder, die mithilfe dieser Konfiguration erfasst werden können, z.B. mit der werkzeugnahen ersten Kamera 250. Die Messbilder in den Figuren sind frei von Störkonturen, was unter anderem bedeutet, dass in dem auszuwertenden Teil der Messbilder keine Teile von Umformwerkzeugen oder anderen Komponenten der Federwindemaschine erkennbar sind. Die Messbilder bilden die Schraubenfeder bzw. den dargestellten Abschnitt 220 der Schraubenfeder 200 ausreichend scharf und kontrastreich in Schwarz-Weiß ab. Dabei blickt die Kamera generell seitlich auf die Schraubenfeder.

Der Vergleich der Fig. 3A, 3B und 3C veranschaulicht, dass generell nicht davon ausgegangen werden kann, dass der Winkel zwischen der Messkamera bzw. ihrer optischen Achse und der Schraubenfeder, also der Federachse 211 der Schraubenfeder, stets 90° beträgt, da sich die Schraubenfeder durch den Produktionsprozess gegen die Kameraebene zeitweise verkippen kann. So zeigt beispielsweise die Federachse 211 in Fig. 3A etwas nach oben. Außerdem ist es möglich, seitlich durch die Windungen hindurchzublicken, was darauf hindeutet, dass die Federachse 211 nicht parallel zur dargestellten Bildebene verläuft. In den Fig. 3B und 3C sind Situationen gezeigt, bei denen die Federachse 211 mehr oder weniger in der Bildebene liegt, jedoch unterschiedlich stark in der vertikalen Ebene geneigt ist. Dadurch ist erkennbar, dass sich die Perspektive, aus der die Kamera auf die Feder blickt, trotz stationärer Anbringung der Kamera in verschiedenen Phasen des Federherstellungsprozesses ändern kann.

Um einen quantitativen Bezug zwischen den in den Messbildern erkennbaren Merkmalen und realen Werten zur Beschreibung der Federgeometrie zu schaffen (beispielsweise Einheiten in Millimeter oder im Winkel), sollte die Kamera kalibriert werden. Die Kalibrierung kann vor Beginn des Federherstellungsprozesses durchgeführt werden, beispielsweise durch Aufnahme einer Maßverkörperung mit bekannten Dimensionen, wie zum Beispiel einer Schablone. Eine andere Möglichkeit besteht darin, die Kamera mithilfe des auf dem Kamerabild sichtbaren und in der Maschine bekannten Drahtdurchmessers d zu kalibrieren. Nachfolgend wird davon ausgegangen, dass kalibrierte Kamerabilder bzw. Messbilder vorliegen.

Bei der Serienfertigung von Schraubenfedern mit Hilfe dieser Federwindemaschine kann wie folgt vorgegangen werden.

Bei der Einrichtung der Federwindemaschine werden die Umformwerkzeuge zunächst in ihre jeweiligen Grundstellungen gebracht.

Weiterhin wird die gewünschte Soll-Geometrie der Schraubenfeder an der Anzeige- und Bedieneinheit 170 eingegeben oder es werden, beispielsweise durch Eingabe einer Identifizierungsnummer, entsprechende bereits vorliegende Geometriedaten aus einem Speicher der Federwindemaschine geladen.

Auf Grundlage der Geometriedaten errechnet ein sogenannter NC-Generator ein NC-Steuerprogramm, dessen einzelne NC-Sätze und deren Abfolge bei der nachfolgenden Fertigung die koordinierten Arbeitsbewegungen der Einrichtungen und Werkzeuge der Federwindemaschine steuern.

Bei dem Verfahren wird mittels einer Recheneinheit ein dreidimensionales Federmodell der Schraubenfeder erstellt. Das Federmodell wird mithilfe einer geeigneten Anzahl von Modellparametern parametrisiert, wobei typischerweise mehrere Modellparameter genutzt werden. Das Federmodell liegt in Form entsprechender Daten in einer Recheneinheit der Steuereinheit vor.

Als Startkonfiguration dient ein erstes Federmodell, welches die im Steuerprogramm hinterlegte gewünschte Soll-Geometrie der Feder repräsentiert. Die Schraubenfeder kann im Steuerprogramm anhand ihrer Parameter, beispielsweise Durchmesser, Steigung, Windungszahl etc., programmiert werden. Sehr einfache Schraubenfedern können beispielsweise mit lediglich drei Zeilen des NC-Steuerprogramms beschrieben werden, wobei z.B. eine Zeile die Fertigungsparameter für die anliegende Anfangswindung, eine weitere Zeile die Parameter für einen Konstantabschnitt des Federkörpers und eine dritte Zeile die Fertigungsparameter für eine anliegende Endwindung repräsentieren. Anhand dieser im NC-Steuerprogramm hinterlegten Daten wird automatisch ein erstes Helixmodell bzw. Federmodell erzeugt, das die Soll-Geometrie der Schraubenfeder beschreibt.

Da die einzelnen Sätze des NC-Steuerprogramms beispielsweise den Steigungsverlauf in der Regel unstetig beschreiben, werden bei bevorzugten Ausführungsformen diese Werte zunächst in einer Glättungsoperation z.B. mithilfe eines Filters geglättet. Die Glättungsfunktion ist so ausgelegt, dass das plastische Verformungsverhalten des Drahts beim Federwinden berücksichtigt wird. Dabei werden beispielsweise Knicke oder starke Steigungsänderungen geglättet, da in diesen Bereichen das Drahtmaterial fließen und eine glattere Form annehmen würde. Der Drahtdurchmesser des Federmodells entspricht dabei dem in der Steuerungssoftware hinterlegten Drahtdurchmesser d des Drahts.

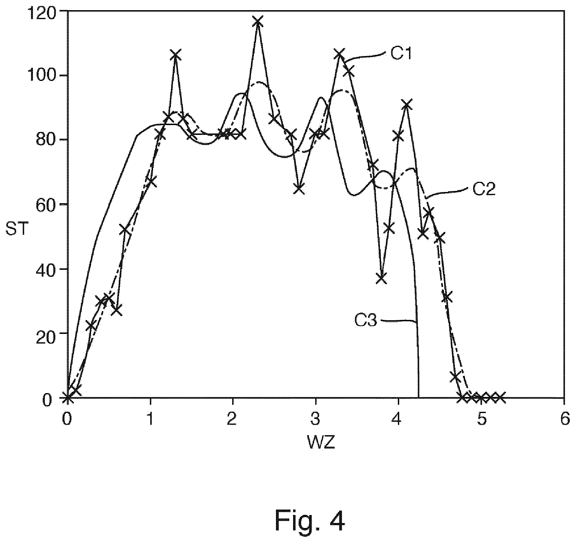

Anhand von Fig. 4 werden die Effekte der Glättungsoperation anhand eines Beispiels erläutert. In dem Diagramm ist die auf der y-Achse aufgetragene Federsteigung ST als Funktion der auf der x-Achse abgetragenen Windungszahl WZ dargestellt. Dabei repräsentiert die Kurve C1 den Steigungsverlauf gemäß dem NC-Steuerprogramm. Die strichpunktierte Kurve C2 repräsentiert den Zusammenhang zwischen Federsteigung und Windungszahl nach Anwendung der Glättungsoperation. Es ist erkennbar, dass Spitzen der Federsteigung eliminiert und durch glatte Verläufe ersetzt sind. Die durchgezogene Kurve C3 zeigt Messwerte, die anhand einer gemäß dem Steuerprogramm produzierten Feder erzeugt wurden. Es ist erkennbar, dass die geglättete Kurve (Kurve C2) die Verhältnisse bei der realen Feder besser annähert als die Werte des NC-Steuerprogramms vor der Glättung.

Im weiteren Verlauf des Verfahrens wird nun im Rahmen eines Optimierungslaufs von dem dreidimensionalen Federmodell (Helixmodell) ein zweidimensionales Referenzbild (2D-Referenzbild) abgeleitet. Diese Ableitung wird zunächst unter der Annahme einer vordefinierten Startperspektive erstellt. Die Größe des 2D-Referenzbilds wird vorzugsweise über die Beziehung zwischen dem bekannten Drahtdurchmesser d in Millimeter und dem im Messbild erkennbaren Drahtdurchmesser in Pixeln bestimmt.

Das richtig skalierte 2D-Referenzbild wird dann rechnerisch über das Messbild der Schraubenfeder gelegt. Aus der quantifizierbaren Differenz beider Bilder kann nun ein Maß für die Übereinstimmung beider Bilder bestimmt werden. Dazu können geeignete Abweichungskenngrößen genutzt werden.

Im Ausführungsbeispiel werden die Bilder (Messbild und 2D-Referenzbild) pixelweise, also Pixel für Pixel, verglichen. Diese Art des Bildvergleichs ist besonders gut geeignet für Bilder, die wie im vorliegenden Fall starke Kontraste zwischen interessierendem Objekt (hier Feder, erscheint schwarz) und Hintergrund (erscheint weiß). Beim Bildvergleich werden Pixel, deren Helligkeitswerte genau oder innerhalb eines vorgebbaren engen Wertebereichs übereinstimmen, als identisch bewertet. Bei größeren Abweichungen im Helligkeitswert werden die Pixel als Differenzpixel bewertet. Zur Quantifizierung der Abweichung bei einem Bildvergleich wird hier die Summe der Differenzpixel ermittelt und mit der Summe der übereinstimmenden Pixel ins Verhältnis gesetzt werden. Dieses Verhältnis wird als Abweichungskenngröße genutzt.

In einer nachfolgenden Optimierung ist es nun das Ziel, dieses Maß, also die durch die Abweichungskenngröße quantifizierte Differenz beider Bilder, zu minimieren.

Die Startperspektive kann zum Beispiel über die Anfangsneigung der Kamera (bzw. der optischen Achse der Kamera) zum vermuteten Verlauf der Federachse festgelegt werden. Hierzu kann beispielsweise ein Winkel von 90° angenommen werden. Es ist auch möglich, die Startperspektive aus dem Federbild der Kamera (also aus dem Messbild) abzuleiten. Diese Vorgehensweise kann anhand der Fig. 3A bis 3C verstanden werden. In Fig. 3A ist ersichtlich, dass die Schraubenfeder 200 so orientiert ist, dass die Kamera durch die letzte Windung hindurchblicken kann. Bei Kenntnis der Soll-Geometrie der Feder bedeutet dies, dass die Federachse nicht senkrecht zur Beobachtungsrichtung der Kamera orientiert ist, sondern aus der zur optischen Achse orthogonalen Ebene hinaus geneigt ist. Die dadurch verursachte perspektivische Verzerrung kann bei den nachfolgenden Rechnungen rechnerisch berücksichtigt werden. Im Vergleich dazu erscheint beispielsweise in Fig. 3B die letzte Windung am Federende wie eine ebene Windung, was anzeigt, dass die Orientierung der Federachse in diesem Beispiel im Wesentlichen senkrecht zur Beobachtungsrichtung der Messkamera orientiert ist, so dass insoweit keine perspektivische Verzerrung vorliegt. Die Orientierung der Federachse 211 in der Kameraebene kann leicht anhand der Projektion der Hüllkurve der Schraubenfeder ermittelt und bei der Berechnung berücksichtigt werden.

Wenn die Orientierung bzw. die Lage der Schraubenfeder in Bezug auf die Kamera ausreichend genau aus dem Kamerabild abgeleitet wird, kann die Anzahl der bei der Optimierung genutzten Optimierungsparameter deutlich reduziert und somit die Rechenzeit verringert werden.

Ausgehend von dem Vergleich des 2D-Referenzbilds mit dem Messbild und der daraus abgeleiteten Abweichungskenngrößen erfolgt nun eine rechnerische Optimierung des Federmodells, um dieses so zu modifizieren, dass ein daraus abgeleitetes 2D-Referenzbild des beobachteten Federabschnitts möglichst gut mit dem entsprechenden Messbild des Federabschnitts übereinstimmt. Typischerweise werden bei dieser numerischen Simulationsrechnung innerhalb mehrerer Iterationen die Modellparameter des Federmodells variiert, um eine möglichst gute Übereinstimmung zum Messbild zu erzielen.

Bei bevorzugten Ausführungsformen werden unterschiedliche Typen von Modellparametern genutzt. Diese können unterteilt werden in Parameter, die die Perspektive repräsentieren (Perspektiv-Parameter), und solche Parameter, die die Geometrie der Schraubenfeder beschreiben (Geometrie-Parameter). Parameter der Kategorie "Perspektive" dienen ausschließlich der Herstellung einer guten Vergleichbarkeit zwischen dem Kamerabild (Messbild) und dem entsprechenden 2D-Referenzbild. Die Geometrie-Parameter, also die Parameter der Kategorie "Geometrie", beschreiben quantitativ das Helixmodell.

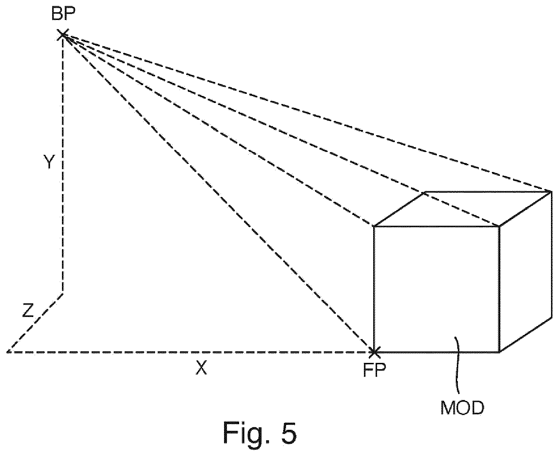

Zur Erläuterung von Perspektiv-Parametern zeigt Fig. 5 eine schematische Darstellung des räumlichen Bezugs zwischen dem Blickpunkt der Kamera und einem Fixpunkt des Helixmodells MOD, das durch einen Würfel repräsentiert wird. Bei der Ableitung des 2D-Referenzbilds aus dem Helixmodell wird vorzugsweise der Abstand (x, y, z) des Blickpunkts BP zu einem Fixpunkt FP des Helixmodells beschrieben. Daraus ergeben sich der Blickwinkel und die Blickrichtung auf das Federmodell, wodurch die Perspektive quantitativ beschrieben werden kann. Der Blickpunkt repräsentiert dabei die räumliche Position der Kamera, als Fixpunkt kann z.B. der Massenschwerpunkt des im Messbild erscheinenden Teils der Schraubenfeder genutzt werden.

Zur Erfassung der Federgeometrie werden in vielen Fällen Federmodelle bzw. Helixmodelle zweckmäßig sein, die sich aus mehreren, aber endlich vielen Teil-Modellen zusammensetzen, deren Enden in Position, Durchmesser und Steigung jeweils zueinander identisch sind, so dass die Teil-Modelle stetig ineinander übergehen. Beispielsweise können zwei, drei, vier, fünf oder sechs Teil-Modelle generiert werden, ggf. auch mehr. Abhängig vom Federtyp können die einzelnen Teil-Modelle durch unterschiedliche Anzahlen von Modellparametern beschrieben werden. Dabei kann z.B. anhand des NC-Steuerprogramms in unterschiedliche Federbereiche unterschieden werden. Beispielsweise kann ein konischer Federabschnitt durch zwei Parameter für den Durchmesser parametrisiert werden, da sich der Durchmesser über die Federlänge des konischen Abschnitts zwischen dessen Anfang und dessen Ende verändert. Somit können der Anfangsdurchmesser und der Enddurchmesser an gegenüberliegenden Enden dieses Abschnitts den konischen Federabschnitt beschreiben. Im Gegensatz dazu kann ein zylindrischer Federabschnitt mit nur einem einzigen Parameter für den Durchmesser parametrisiert werden.

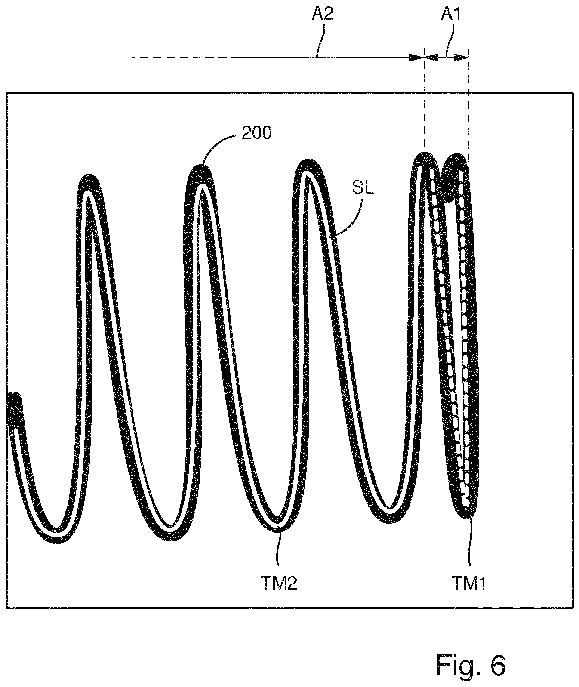

Um die Berechnungszeit zu reduzieren, hat es sich als zweckmäßig herausgestellt, die Teil-Modelle einzeln und nacheinander den korrespondierenden Federabschnitten im Messbild anzupassen. Zur Veranschaulichung zeigt Fig. 6 eine gemeinsame Darstellung eines beobachteten Federabschnitts der Schraubenfeder 200 im Messbild und dazu korrespondierende Abschnitte des Federmodells im angepassten 2D-Referenzbild. Das Federmodell im 2D-Referenzbild ist anhand des Verlaufs der Schraubenlinie SL gezeigt, die den Verlauf der neutralen Achse des "Drahts" des Federmodells repräsentiert.

Im gezeigten Beispiel wird der im Messbild erkennbare Abschnitt der Schraubenfeder 200 durch zwei ineinander übergehende Teil-Modelle TM1, TM2 des Federmodells repräsentiert. Im dargestellten Endabschnitt der Schraubenfeder liegt anschließend an das freie Ende der Anlageabschnitt A1, in welchem die Steigung der Schraubenfeder sich kontinuierlich ändert. Daran schließt ein zweiter Abschnitt A2 an, in dem die Steigung im Wesentlichen konstant bleibt (Konstantabschnitt).

Bei der Optimierung wird vorzugsweise so vorgegangen, dass zunächst eine Anpassung des ersten Teil-Modells TM1 an den Federabschnitt A1 mit veränderlicher Steigung durchgeführt und abgeschlossen wird, bevor in einem nachfolgenden Optimierungsschritt eine Anpassung des zweiten Teil-Modells TM2 an den Konstantabschnitt A2 erfolgt. Zwar wäre auch eine zeitgleiche Anpassung beider Teil-Modelle an die entsprechenden Federabschnitte möglich. Dabei würde jedoch die Anzahl der aufsummierten Parameter als Exponent in die Anzahl der benötigten Rechenläufe eingehen, so dass erhebliche Rechenzeit erforderlich wäre. Die Aufteilung in Teil-Modelle und die sukzessive Optimierung jeweils in den Bereichen der Teil-Modelle reduziert dagegen die Rechenzeit erheblich.

Dazu trägt auch bei, dass die Ergebnisse der Optimierung aus dem ersten Abschnitt A1 als Randbedingung in die Optimierung des zweiten Teil-Modells für den zweiten Abschnitts A2 übernommen werden können. Denn in einer realen Schraubenfeder würde der dem zweiten Abschnitt A2 zugewandte Endpunkt des ersten Abschnitts A1 die gleiche Ausrichtung und den gleichen Durchmesser haben wie der daran anschließende Anfangspunkt des zweiten Abschnitts A2. Der Endpunkt des Teil-Modells TM1 entspräche somit dem Anfangspunkt des Teil-Modells TM2.

In den einzelnen Optimierungsläufen werden die Modellparameter jeweils so lange variiert, bis ein Abbruchkriterium erfüllt ist. Das Abbruchkriterium kann beispielsweise das Unterschreiten einer definierten Differenz der verglichenen Bilder sein. Um die Anzahl der Iterationen zu reduzieren und dadurch Rechenzeit einzusparen, ist es vorzugsweise vorgesehen, die Modellparameter nicht zufällig zu verändern, sondern nach einem bestimmten Muster bzw. einer bestimmten Strategie, so dass die Optimierung schnell konvergiert.

Da die Kamera die sich entwickelnde Feder während des gesamten Fertigungsprozesses beobachtet, ist es möglich, Messbilder aus mehreren unterschiedlichen Richtungen aufzunehmen, da sich die Schraubenfeder während der Fertigung aus der Maschine "herausdreht". Somit können Messbilder aus unterschiedlichen, beispielsweise mehr oder weniger radialen Richtungen in Bezug auf die Federachse erfasst und miteinander verrechnet werden. Hierdurch kann die Präzision der Anpassung und dadurch die Präzision der Messung erhöht werden.

Der eigentliche Messschritt erfolgt bei dem Verfahren nicht an der realen Schraubenfeder, sondern am Federmodell. Am (ggf. modifizierten) Federmodell können an jeder axialen Position zum Beispiel der Durchmesser der Feder und die Steigung entnommen werden. Diese entnommenen Werte sind zwar der Ungenauigkeit des Federmodells unterworfen, können aber für die Korrektur der Schraubenfeder als Messwerte verwendet werden.

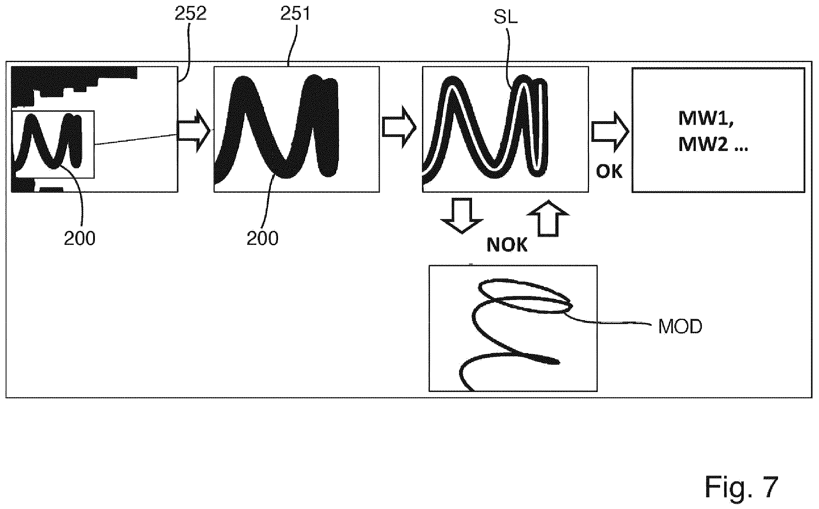

Fig. 7 zeigt eine schematische Darstellung einer Abfolge von Verfahrensschritten bei einer Verfahrensvariante. Ausgangspunkt der dargestellten modellbasierten Federmessung ist das links gezeigte Kamerabild. Im rechteckigen Bildfeld 252 der Kamera sind ein Endabschnitt der zu vermessenden Schraubenfeder 200 sowie teilweise in das Bildfeld hineinragende Teile der Umformeirichtung zu erkennen. Aus diesem Kamerabild wird das daneben gezeigte kontrastreiche Messbild 251 abgeleitet, das ein von Störkonturen freier Ausschnitt des Kamerabildes ist, in welchem die Schraubenfeder schwarz und der Hintergrund weiß erscheint. Die rechts daneben gezeigten Teilbilder illustrieren den Optimierungsprozess, d.h. die in der Regel iterative Anpassung des im Rechner generierten Federmodells MOD an den im Messbild gezeigten Federabschnitt. Die in das Federbild eingezeichnete Schraubenlinie SL illustriert die Güte der Anpassung zwischen dem Bild der realen Schraubenfeder und dem Federmodell bzw. dem aus dem Federmodell abgeleiteten 2D-Referenzbild (vgl. Fig. 6). Solange die aus einem rechnergestützten Bildvergleich quantitativ ermittelte Abweichung zwischen Federmodell und Schraubenfeder zu groß ist (NOK = nicht in Ordnung), wird das Federmodell MOD durch Veränderung von Modellparametern weiter modifiziert. Ist ein Minimum der Abweichung erreicht bzw. ist ein vorgegebener Schwellwert für die Abweichung unterschritten, so gilt die Anpassung als ausreichend gut und das Federmodell gibt die Federgeometrie mit nur geringer Abweichung wieder (OK = in Ordnung). Dann können aus dem "bestangepassten" Federmodell Messwerte MW1, MW2 etc. rechnerisch abgeleitet werden.

Ausführungsbeispiele wurden anhand einer Schraubenfeder mit angebogenen Endwindungen erläutert. Das ist eine für Druckfedern typische Konfiguration. Auch andere Typen von Schraubenfedern, z.B. Zugfedern mit Ösen an den Enden oder Schenkelfedern, also schraubenförmig gewickelte bzw. gewundene Drahtfedern mit abstehenden geraden Enden (Schenkeln) können unter Nutzung der Erfindung hergestellt werden. Der Begriff "Schraubenfeder" soll diese unterschiedlichen Federtypen umfassen.

## Patentansprüche

1. Verfahren zur Herstellung von Schraubenfedern durch Federwinden mittels einer numerisch gesteuerten Federwindemaschine (100), worin ein Draht (115) unter der Steuerung durch ein NC-Steuerprogramm durch eine Zuführeinrichtung einer Umformeinrichtung (120) der Federwindemaschine zugeführt und mit Hilfe von Werkzeugen der Umformeinrichtung zu einer Schraubenfeder (200) umgeformt wird, mit folgenden Schritten:
A) Definieren einer gewünschten Soll-Geometrie der Schraubenfeder (200);
B) Definieren eines zur Erzeugung der Soll-Geometrie geeigneten NC-Steuerprogramms;
C) Erstellen eines dreidimensionalen Federmodells (MOD) der Schraubenfeder unter Verwendung einer Anzahl von Modellparametern, wobei das Federmodell die gewünschte Soll-Geometrie repräsentiert;
D) Erfassen wenigstens eines zweidimensionalen Messbildes (251) eines Federabschnitts der Schraubenfeder mit einer Kamera (250) zu einem Messzeitpunkt während oder nach der Herstellung der Schraubenfeder;
E) Ableiten eines 2D-Referenzbildes eines zu dem Federabschnitt des Messbildes korrespondierenden Federabschnitts des Federmodells;
F) Vergleichen des 2D-Referenzbildes mit dem Messbild des Federabschnitts zur Ermittlung wenigstens einer Abweichungskenngröße;
G) Ableiten wenigstens eines die Ist-Geometrie der Schraubenfeder beschreibenden Messwerts (MW1, MW2) aus dem Federmodell;
H) Verarbeitung des Messwerts.

2. Verfahren nach Anspruch 1, **gekennzeichnet durch** folgenden Schritt:
Modifizieren des Federmodells (MOD) durch Veränderung wenigstens eines Modellparameters in der Weise, dass eine durch die Abweichungskenngröße definierte Abweichung zwischen dem 2D-Referenzbild und dem Messbild des Federabschnitts minimiert wird, wodurch ein modifiziertes Federmodell erstellt wird.

3. Verfahren nach Anspruch 1 oder 2, **dadurch gekennzeichnet, dass** ein erstes Federmodell auf Basis des für die Soll-Geometrie definierten NC-Steuerprogramms automatisch erstellt wird.

4. Verfahren nach Anspruch 3, **dadurch gekennzeichnet, dass** beim Erstellen des ersten Federmodells aus Zeilen des NC-Steuerprogramms eine Glättungsoperation durchgeführt wird in der Weise, dass das Federmodell durch eine stetig differenzierbare Funktion beschreibbar ist.

5. Verfahren nach einem der vorhergehenden Ansprüche, **dadurch gekennzeichnet, dass** beim Erstellen des Federmodells eine Reihe mit zwei oder mehr Teil-Modellen (TM1, TM2) erstellt wird, die unmittelbar aufeinander folgende Abschnitte (A1, A2) der Schraubenfeder (200) repräsentieren.

6. Verfahren nach Anspruch 5, durch gekennzeichnet, dass beim Modifizieren des Federmodells die Teil-Modelle (TM1, TM2) einzeln und nacheinander korrespondierenden Abschnitten (A1, A2) im Messbild angepasst werden.

7. Verfahren nach einem der vorhergehenden Ansprüche, **dadurch gekennzeichnet, dass** eine Kalibrierung der Kamera (250) durchgeführt wird, wobei zur Kalibrierung vorzugsweise ein durch die Kamera erfasster Drahtdurchmesser (d) mit einem Drahtdurchmesser des NC-Programms verrechnet wird.

8. Verfahren nach einem der vorhergehenden Ansprüche, **dadurch gekennzeichnet, dass** Geometrie-Parameter und Perspektiv-Parameter als Modellparameter verwendet werden, wobei Geometrie-Parameter die Geometrie der Schraubenfeder (200) definieren und Perspektiv-Parameter die räumliche Orientierung der Kamera in Bezug auf die Schraubenfeder definieren.

9. Verfahren nach einem der vorhergehenden Ansprüche, **dadurch gekennzeichnet, dass** während der Herstellung der Schraubenfeder mehrere Messbilder zu unterschiedlichen Messzeitpunkten erfasst und die Messbilder zum Vergleichen mit dem Federmodell genutzt werden.

10. Verfahren nach einem der vorhergehenden Ansprüche, **dadurch gekennzeichnet, dass** beim Ableiten wenigstens eines die Federgeometrie der Schraubenfeder beschreibenden Messwerts aus dem modifizierten Federmodell für ausgewählte Positionen entlang der Schraubenfeder aus den Abweichungskenngrößen korrespondierende Messfehler ermittelt und weiterverarbeitet, insbesondere angezeigt werden.

11. Federwindemaschine (100) zur Herstellung von Schraubenfedern (200) durch Federwinden unter der Steuerung durch ein NC-Steuerprogramm, mit einer Einzugseinrichtung (110) zum Zuführen von Draht (115) zu einer Umformeinrichtung (120), wobei die Umformeinrichtung mindestens ein Windewerkzeug (122, 124), welches im Wesentlichen den Durchmesser der Schraubenfeder an einer vorgebbaren Position bestimmt, sowie mindestens ein Steigungswerkzeug (130) aufweist, dessen Eingriff an einer sich entwickelnden Schraubenfeder die lokale Steigung der Schraubenfeder bestimmt, **dadurch gekennzeichnet, dass** die Federwindemaschine eine Kamera (250) zum Erfassen wenigstens eines zweidimensionalen Messbildes (251) eines Federabschnitts der Schraubenfeder sowie eine NC-Steuereinrichtung (180) aufweist und zur Durchführung des Verfahrens nach einem der vorhergehenden Ansprüche mit den Schritten A) bis H) von Anspruch 1 konfiguriert ist.

12. Computerprogrammprodukt, welches auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass eine über den Computer gesteuerte Federwindemaschine, die eine Kamera zum Erfassen wenigstens eines zweidimensionalen Messbildes eines Federabschnitts einer Schraubenfeder aufweist, ein Verfahren gemäß einem der Ansprüche 1 bis 10 durchführt.

## Claims

1. Method for producing helical springs by spring winding by means of a numerically controlled spring winding machine (100), wherein a wire (115) is fed, under the control of an NC control program, to a forming device (120) of the spring winding machine by a feed device and is formed using tools of the forming device to produce a helical spring (200), comprising the following steps:
A) defining a desired target geometry of the helical spring (200);
B) defining an NC control program suitable for producing the target geometry;
C) creating a three-dimensional spring model (MOD) of the helical spring using a number of model parameters, the spring model representing the desired target geometry;
D) capturing at least one two-dimensional measurement image (251) of a spring portion of the helical spring using a camera (250) at a measurement time during or after production of the helical spring;
E) deriving a 2D reference image of a spring portion of the spring model that corresponds to the spring portion of the measurement image;
F) comparing the 2D reference image with the measurement image of the spring portion in order to determine at least one deviation characteristic;
G) deriving at least one measured value (MW1, MW2) describing the actual geometry of the helical spring from the spring model;
H) processing the measured value.

2. Method according to Claim 1, **characterized by** the following step:
modifying the spring model (MOD) by changing at least one model parameter in such a way that a deviation, defined by the deviation characteristic, between the 2D reference image and the measurement image of the spring portion is minimized, thereby creating a modified spring model.

3. Method according to Claim 1 or 2, **characterized in that** a first spring model is created automatically on the basis of the NC control program defined for the target geometry.

4. Method according to Claim 3, **characterized in that** creating the first spring model from lines of the NC control program results in a smoothing operation being carried out in such a way that the spring model can be described by a continuously differentiable function.

5. Method according to one of the preceding claims, **characterized in that** creating the spring model results in a series of two or more partial models (TM1, TM2) being created which represent directly successive portions (A1, A2) of the helical spring (200).

6. Method according to Claim 5, **characterized in that** modifying the spring model results in the partial models (TM1, TM2) being individually and consecutively matched with corresponding portions (A1, A2) in the measurement image.

7. Method according to one of the preceding claims, **characterized in that** calibration of the camera (250) is carried out, calibration preferably involving a wire diameter (d) captured by the camera being set against a wire diameter of the NC program.

8. Method according to one of the preceding claims, **characterized in that** geometry parameters and perspective parameters are used as model parameters, geometry parameters defining the geometry of the helical spring (200) and perspective parameters defining the spatial orientation of the camera with respect to the helical spring.

9. Method according to one of the preceding claims, **characterized in that** multiple measurement images are captured at different measurement times during production of the helical spring and the measurement images are used for comparison with the spring model.

10. Method according to one of the preceding claims, **characterized in that** deriving at least one measured value describing the spring geometry of the helical spring from the modified spring model results in corresponding measurement errors for selected positions along the helical spring being determined from the deviation characteristics and processed further, in particular displayed.

11. Spring winding machine (100) for producing helical springs (200) by spring winding under the control of an NC control program, comprising an intake device (110) for feeding wire (115) to a forming device (120), the forming device comprising at least one winding tool (122, 124), which essentially determines the diameter of the helical spring at a predeterminable position, and at least one pitch tool (130), the engagement of which on a developing helical spring determines the local pitch of the helical spring, **characterized in that** the spring winding machine comprises a camera (250) for capturing at least one two-dimensional measurement image (251) of a spring portion of the helical spring and an NC control device (180) and is configured to carry out the method according to one of the preceding claims with steps A) to H) from Claim 1.

12. Computer program product which is stored on a computer-readable medium or realized as a signal, the computer program product, when loaded into the memory of a suitable computer and executed by a computer, causing a spring winding machine, which is controlled by the computer and has a camera for capturing at least one two-dimensional measurement image of a spring portion of a helical spring, to carry out a method according to one of Claims 1 to 10.

## Revendications

1. Procédé de production de ressorts hélicoïdaux par enroulement de ressorts au moyen d'une machine à enrouler les ressorts (100) à commande numérique dans laquelle un fil (115) est amené par un dispositif d'amenée, à l'aide de la commande effectuée par un programme de commande numérique, à un dispositif de formage (120) de la machine à enrouler les ressorts et est façonné en un ressort hélicoïdal (200) à l'aide d'outils du dispositif de formage, avec les étapes suivantes :
A) la définition d'une géométrie de consigne souhaitée pour le ressort hélicoïdal (200) ;
B) la définition d'un programme de commande numérique approprié pour la création de la géométrie de consigne ;
C) la création d'un modèle de ressort tridimensionnel (MOD) du ressort hélicoïdal en utilisant un nombre de paramètres de modèle, le modèle de ressort représentant la géométrie de consigne souhaitée ;
D) l'acquisition d'au moins une image de mesure bidimensionnelle (251) d'une section de ressort du ressort hélicoïdal avec une caméra (250) à un moment de mesure pendant ou après la production du ressort hélicoïdal ;
E) la dérivation d'une image de référence 2D d'une section de ressort du modèle de ressort correspondant à la section de ressort de l'image de mesure ;
F) la comparaison de l'image de référence 2D à l'image de mesure de la section de ressort pour déterminer au moins une caractéristique d'écart ;
G) la dérivation d'au moins une valeur de mesure (MW1, MW2) décrivant la géométrie réelle du ressort hélicoïdal à partir du modèle de ressort ;
H) le traitement de la valeur de mesure.

2. Procédé selon la revendication 1, **caractérisé par** l'étape suivante :
la modification du modèle de ressort (MOD) en changeant au moins un paramètre de modèle de manière à minimiser un écart défini par la caractéristique d'écart entre l'image de référence 2D et l'image de mesure de la section de ressort, créant ainsi un modèle de ressort modifié.

3. Procédé selon la revendication 1 ou 2, **caractérisé en ce qu'**un premier modèle de ressort est créé automatiquement sur la base du programme de commande numérique défini pour la géométrie de consigne.

4. Procédé selon la revendication 3, **caractérisé en ce que**, lors de la création du premier modèle de ressort à partir de lignes du programme de commande numérique, une opération de lissage est effectuée de telle sorte que le modèle de ressort puisse être décrit par une fonction différentiable de manière continue.

5. Procédé selon l'une quelconque des revendications précédentes, **caractérisé en ce que**, lors de la création du modèle de ressort, une série est créée avec deux ou plusieurs modèles partiels (TM1, TM2) représentant des sections immédiatement consécutives (A1, A2) du ressort hélicoïdal (200).

6. Procédé selon la revendication 5, **caractérisé en ce que**, lors de la modification du modèle de ressort, les modèles partiels (TM1, TM2) sont adaptés individuellement et successivement à des sections correspondantes (A1, A2) dans l'image de mesure.

7. Procédé selon l'une quelconque des revendications précédentes, **caractérisé en ce qu'**un calibrage de la caméra (250) est effectué, un diamètre de fil (d) détecté par la caméra étant de préférence calculé avec un diamètre de fil du programme de commande numérique pour le calibrage.

8. Procédé selon l'une quelconque des revendications précédentes, **caractérisé en ce que** des paramètres de géométrie et des paramètres de perspective sont utilisés comme paramètres de modèle, les paramètres de géométrie définissant la géométrie du ressort hélicoïdal (200) et les paramètres de perspective définissant l'orientation spatiale de la caméra par rapport au ressort hélicoïdal.

9. Procédé selon l'une quelconque des revendications précédentes, **caractérisé en ce que**, pendant la production du ressort hélicoïdal, plusieurs images de mesure sont acquises à différents moments de mesure et les images de mesure sont utilisées pour la comparaison avec le modèle de ressort.

10. Procédé selon l'une quelconque des revendications précédentes, **caractérisé en ce que**, lors de la dérivation d'au moins une valeur de mesure décrivant la géométrie du ressort hélicoïdal à partir du modèle de ressort modifié pour des positions sélectionnées le long du ressort hélicoïdal, des erreurs de mesure correspondantes sont déterminées à partir des caractéristiques d'écart et traitées ultérieurement, en particulier affichées.

11. Machine à enrouler les ressorts (100) pour la production de ressorts hélicoïdaux (200) par enroulement de ressorts sous la commande d'un programme de commande numérique, avec un dispositif d'amenée (110) pour l'amenée de fil (115) à un dispositif de formage (120), le dispositif de formage présentant au moins un outil d'enroulement (122, 124) qui détermine essentiellement le diamètre du ressort hélicoïdal à une position pouvant être prédéterminée, ainsi qu'au moins un outil de pas (130), dont l'engagement sur un ressort hélicoïdal en développement détermine le pas local du ressort hélicoïdal, **caractérisé en ce que** la machine à enrouler les ressorts comprend une caméra (250) pour acquérir au moins une image de mesure bidimensionnelle (251) d'une section de ressort du ressort hélicoïdal, ainsi qu'un dispositif de commande numérique (180), et est configurée pour mettre en œuvre le procédé selon l'une quelconque des revendications précédentes avec les étapes A) à H) de la revendication 1.

12. Produit de programme informatique stocké sur un support lisible par ordinateur ou réalisé sous la forme d'un signal, le produit de programme informatique, lorsqu'il est chargé dans la mémoire d'un ordinateur approprié et exécuté par un ordinateur, amènant une machine à enrouler les ressorts, commandée par l'intermédiaire de l'ordinateur et comprenant une caméra pour capturer au moins une image de mesure bidimensionnelle d'une section de ressort d'un ressort hélicoïdal, à exécuter un procédé selon l'une quelconque des revendications 1 à 10.
